# EUROPEAN PATENT APPLICATION

(11) **EP 1 146 172 A2**
(43) Date of publication of application: **17.10.2001**
(21) Application number: 01303431.9
(22) Date of filing: 12.04.2001
(51) Int. Cl.: E01C 19/00, E02D 3/00, B09B 3/00

(54) **Reuse of soil arisings from excavations**

(30) Priority: 13.04.2000 GB 0009117
(71) Applicant: HERIOT-WATT UNIVERSITY, Edinburgh EH14 4AS (GB)
(72) Inventor: Fordyce, Derek Stanley Eoin, Edinburgh EH12 8YA (GB)
(74) Representative: Szczuka, Jan Tymoteusz

(57) **Abstract**

The present invention provides a method and apparatus for reusing soil arisings from excavations to produce a non-plastic material suitable for use in road construction. The method comprises the steps of:
a) screening soil arisings so as to remove oversize material being of greater than a predetermined maximum size in any linear dimension to produce screened soil arisings having a size not greater than said predetermined maximum size; and
b) mixing said screened soil arisings with pulverised fuel ash, the amount of pulverised fuel ash relative to screened soil arisings being chosen so that the resulting material is non-plastic.

## Description

The present invention relates to soil arisings from road excavations. In particular, though not exclusively, the invention relates to a new process for producing a non-plastic material from such soil arisings and for producing primary structural material and secondary aggregates using this non-plastic material.

Traditionally, when roads are excavated to gain access to utility apparatus, such as cables and pipes, the excavated 'arisings', or at least the soil arisings, are taken to landfill. Similarly, when a new construction site is excavated to form the foundations to buildings and roads, the soil arisings, other than the topsoil and soil used to form land features, is taken to landfill. Landfill sites are licensed to control the quality of material being deposited. Landfill sites are used for all forms of waste, household, commercial as well as construction. Landfill sites are either worked out quarries, or natural hollows in the ground profile. There are increasing restrictions being placed on the number and operation of landfill sites throughout the developed world. Construction waste is increasingly being viewed as the source of ingredients for new materials. In the UK, and forseeably elsewhere, taxation is being adjusted to force the adoption of processes which covert construction 'waste' to ingredients for new materials. There is thus an ever-increasing pressure to find ways of converting waste to new material.

The reason for soil being considered as a waste material is that it contains a varying percentage of very fine particles. The fine particles are the result of the continual degradation of fractured rock in the form of stone or aggregate. Very fine particles when wet deform readily under load; such material is water sensitive, meaning that it can be hard and resist loading when dry, but become soft and deform readily when wet. A material that deforms under load as a result of contained water is described as 'plastic'.

As used herein the term 'plastic' indicates a material which is cohesive and deforms, without crumbling, under the action of a mobilising force. A plastic material deforms without reduction in volume under the mobilising force. British Standard BS1377:part 2:1990 defines a 'plastic limit', as the (minimum) moisture content corresponding to the transition between a cohesive material than can deform, to a material that crumbles under a mobilising force. The British Standard also defines 'liquid limit' as the (maximum) moisture content at which a material will begin to flow under its own weight. A material which is between these two limits of moisture content is defined as being 'plastic'.

Such a plastic material can only be used in situations that are non-load bearing. Excavated soil may be able to be reused if the moisture content is appropriate, but this is seldom the case as excavated soil may contain too little water, or by being left in a spoil heap it may become too wet as a result of rainfall. Tipping the material in a landfill is generally the only solution, other than performing a process of stabilisation of the soil mass using pulverised fuel ash (PFA), lime or cement. Current such stabilisation procedures are crude using essentially farm equipment which rotavates the stabilising medium into the whole excavated soil mass. There is not sufficient quality control in such a process to produce a material suitable for structural use, such as in road building.

Furthermore, the action of taking waste material to landfill involves lorry movements, which adds to traffic congestion and adds to environmental pollution. For a road excavation the process of reinstatement will involve taking waste soil to landfill, travelling to a quarry to collect new aggregate, then returning to site. Reduction or elimination of these journeys will be advantageous.

It is an aim of the present invention to substantially avoid or minimise one or more of the foregoing disadvantages.

According to a first aspect of the present invention, we provide a method of producing a non-plastic material suitable for use in road construction using soil arisings from road excavations, the method comprising the steps of:
a) screening soil arisings so as to remove oversize material being of greater than a predetermined maximum size in any linear dimension to produce screened soil arisings having a size not greater than said predetermined maximum size; and
b) mixing said screened soil arisings with pulverised fuel ash, the amount of pulverised fuel ash relative to screened soil arisings being chosen so that the resulting material is non-plastic.

Thus by means of the method of the present invention, soil arisings may be readily recycled into road construction without the need for disposal thereof in landfill etc. It will of course be appreciated that the non-plastic material provided by the method of the invention can be used in new build road construction or in reinstatement of existing roads following excavations thereof for one purpose or another.

Preferably, the screened soil arisings are fed into a high shear mixer prior to addition of the required amount of PFA (for making the material non-plastic) and the PFA is added incrementally to the mixer, the individual increments preferably not exceeding 5% of the total weight of the screened soil arisings in the mixer.

In general whether or not a soil material can, once it has a suitable moisture content, because plastic, depends on its content of fine particles having a very small particle size which is typically substantially less than 75 microns, albeit 75 microns corresponds to a readily available mesh size screen used for grading soil materials. The greater the proportion of such fine particles in the complete grading profile of the soil arisings material (i.e. the relative proportions of all the different sizes of particles present in the material), the more plastic will be the material (between the plastic and liquid limits of moisture content), and the greater will be the minimum amount of PFA required to make the material non-plastic. It is of course possible to add more than the minimum amount of PFA but it is preferred not to add too much PFA since this will tend to distort the material's grading profile and shift it too far towards the small particle size end of the particle size spectrum, which would have an adverse effect on the quality and structural properties of the non-plastic material provided by the method of the invention. Typically the amount of PFA added would be in the range from 100 to 150% of the minimum amount, preferably from 110 to 130% of the minimum amount. Preferably the maximum amount of PFA added is such that the grading profile of the non-plastic material provided by the method of the invention is maintained within the European Industry Standard grading profile envelope for this type of road construction material, which may be defined in accordance with the following Table (albeit that it will be appreciated that substantially the same envelope may be defined using somewhat different screen mesh sizes).

**Table 1 -**

| **Grading Profile Envelope** | | |
|---|---|---|
| **Screen Mesh Size (mm)** | **Proportion of Material Passing through Screen % w/w** | |
| | **Minimum** | **Maximum** |
| 37.5 | 100 | 100 |
| 28 | 77 | 100 |
| 20 | 66 | 100 |
| 14 | 57 | 85 |
| 10 | 48 | 75 |
| 5 | 35 | 57 |
| 2.36 | 25 | 42 |
| 1.18 | 18 | 36 |
| 0.600 | 13 | 28 |
| 0.300 | 10 | 25 |
| 0.150 | 7 | 22 |
| 0.075 | 5 | 20 |

The total weight of PFA which is added is generally proportional to the percentage weight of fine particle material in the screened soil arisings i.e. particles which are of less than a predetermined screen (maximum) size in any linear dimension, for example less than approximately 75 microns in any linear dimension. To this end the method of the invention preferably further includes the step of sampling the screened soil arisings, and analysing one or more samples so obtained so as to calculate the percentage by weight of material which is less than said predetermined screen size in any linear dimension, in order to facilitate determination of the required amount of PFA. Advantageously the amount of pulverised fuel ash added is X % by weight of the total weight of pulverised fuel ash and screened arisings, where X is from 30 to 70% of the percentage by weight of screened soil arisings having a size less than said screen size of 75 microns.

Various screens of different predetermined mesh size for excluding oversize material greater than a predetermined maximum size may be used for screening the soil arisings. Preferably the mesh size should be not less than 40mm in order to minimise the risk of the screen being clogged by clay in the soil arisings. Larger mesh sizes can be used depending on the proposed application of the non-plastic material provided by the method of the invention, since it is generally desirable that the thickness of the road construction layer in which the material is laid should be not less than twice the largest particle size (corresponding to the screen mesh size), preferably not less than 3 times the mesh size. Typically the mesh size is chosen so that the layer thickness is from 2 to 5 times the mesh size.

The method of the invention may also include storing said resulting non-plastic material in a primary stockpile. Further non-plastic material, preferably formed according to the same method, from soil arisings from different excavation sites, may subsequently be added to the primary stockpile in which case the primary stock pile is preferably homogenised so that batches from different sites are blended together. The method preferably further includes the steps of crushing said material having greater than the predetermined maximum size (hereinafter referred to as the "oversize material") so as to reduce said oversize material to less than said predetermined maximum size, and storing the crushed oversized material in a secondary stockpile. The method may further include adding material from said secondary stockpile to the homogenised primary stockpile so as to change a grading envelope of the material in the primary stockpile. This may be desirable where the primary stockpile material is to be used to produce a structural material having specific desired material properties.

The method may further include mixing the material from said primary stockpile with water so as to form a secondary structural material suitable for use in, for example, lower road construction. The amount of water which is added to the primary stockpile material is such that the resulting water content of the mixture is substantially at around, preferably just below, an optimum moisture (water) content, said optimum moisture content being that which achieves maximum density of the mixture when compacted. Preferably the amount of water added is that which provides a water content which is from 101 to 97%, advantageously from 100 to 98%, of the optimum moisture content.

The optimum moisture content is defined under British Standard BS1377: Part 4:1990, and is determined in the following manner. Samples of material with different moisture contents are compacted in a cylindrical mould in a standard manner and the volume of the compacted sample measured. The compacted samples are then dried to constant weight in an oven and the dry weight of the sample recorded. The dry weight and volume values are then used to determine the dry mass density of each sample, which is then plotted against moisture content. The turning point or peak of the resulting curvilinear graph represents the maximum dry mass density, the corresponding moisture content being the "optimum" moisture content.

The method may further include adding one or more binding materials to the secondary structural material formed by mixing water with said primary stockpile material. For example, one or more of the following binding materials may be added: cement, lime, foamed or emulsified bitumen, so as to form a primary structural material suitable for, for example, upper road constructions, where higher strength material is required than for, say, lower road construction.

According to a second aspect of the invention, we provide apparatus for processing soil arisings, the apparatus comprising: at least one screen means for screening the soil arisings so as to remove material having greater than a predetermined maximum size in any linear dimension; first storage means for storing pulverised fuel ash (PFA), preferably in a substantially dry condition; mixing means for mixing the screened material with said PFA, the mixing means being provided with control means for controlling amounts of ingredients which are added to the mixing means; and second storage means for storing water for adding to the mixing means. The apparatus preferably also includes aggregate crushing means for crushing said material having greater than said predetermined maximum size and removed from the soil arisings.

The mixing means is preferably a high shear mixer, namely a mixer having the capacity to break down lumps of soil and preferably also divide up mass of aggregate. The apparatus may further include additional storage means for storing separately cement and/or lime, preferably also in a substantially dry condition, and/or bitumen which can subsequently be foamed or emulsified.

According to a third aspect of the invention we provide mobile machinery comprising the apparatus according to the above-described second aspect of the invention, said apparatus being mounted together on ground traversing means.

Preferred embodiments of the invention will now be described by way of example only and with reference to the following drawings in which:
Fig. 1 is a flow diagram illustrating a process for controlled stabilisation of plastic soil arisings to obtain two different structural materials; and
Fig. 2 is a block diagram of a mobile apparatus for carrying out the process of Fig. 1.

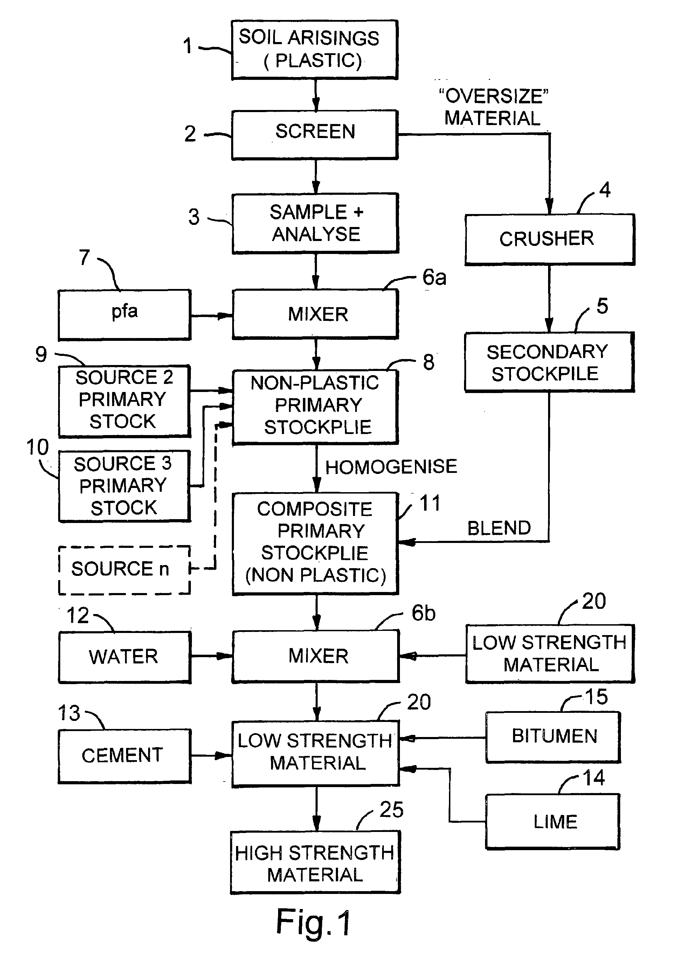

Fig. 1 illustrates a new process for the controlled stabilisation of a plastic soil 1 in the form of soil "arisings" obtained from road excavations to achieve a non-plastic soil 8, and the use of the non-plastic soil to produce low and high strength structural materials 20, 25. The non-plastic soil, with the addition of larger particles from secondary sources, such as crushed large aggregate 5 contained within the original soil arisings or alternatively crushed demolition waste or old rail track ballast, can be used to form a new structural material source by adding water. Water 12 is added in such quantities to ensure maximum material density when compacted and to allow the use of the resulting secondary structural material 20 as a good quality fill material which is substantially equivalent to a graded primary aggregate that is extracted from a rock face, crushed and graded - in particular in relation to its strength. (Strength is generally determined in a standard empirical penetration test such as the California Bearing Ration (CBR) test as defined in British Standard BS1377:Part 4:1990). With the further addition of cement, lime, a combination of lime and cement, and foamed or emulsified bitumen, an enhanced strength primary structural material 25 can be formed with mechanical properties to match conventional materials, such as cement bound materials, concrete or bituminous macadams and asphalts.

The location where the process is carried out will vary with operation. With road arisings from excavations to gain access to utility apparatus, such as pipelines and cables, all excavated material is transported to a local recycling operation where plant has been set up. For other excavations the process may be carried out in a mobile plant provided at the site for this purpose. Such a mobile plant is described in further detail later.
For a local recycling plant to which road arisings are transported for recycling, the plant will consist of:
1. Screens 2 which will divide excavated material into large aggregate particles, greater than 40mm in size, and material less than 40mm in size. The screens are in the form of sieves having aperture size of 40mm maximum diameter. Other screen sizes may be used for practical or commercial reasons, but the screen size will not be less than 10mm when a high percentage of fine material is present, for example greater than 20% material of size less than 75 microns.
2. A high shear mixer 6a that can break down lumps of cohesive soil and that can weigh ingredients and meter foamed or emulsified bitumen. A suitable such mixer is Kalottikone Ltd's MX45c and KAEV 25.
3. Silos 7, 13, 14 that can store separately pulverised fuel ash, and cement and/or lime, all in dry condition i.e. having a maximum moisture content of no greater than 1%.
4. A water bowser 12 and bitumen container 15,
5. An aggregate crusher 4.

Soil arisings 1 from one source will be screened 2. Oversize material (i.e. material greater than the screen aperture size) will be taken to the aggregate crusher 4 for reduction in size to less than the cut-off screen size, which in this example is 40mm. Crushed oversize material will be stored in a secondary stockpile 5. The screened soil arisings, namely material of size less than the cut-off screen size of 40mm, will be sampled and subject to rapid analysis 3 to calculate the percentage of material less than 75 microns in size (in any linear dimension). The screened soil arisings (hereinafter referred to as the "screened material") will then be fed into the high shear mixer 6a; PFA 7 is metered into the mixer 6a in increments to a total weight that is proportional to the calculated percentage (by weight) of screened material which is less than 75 microns in size and which is such that the resulting mixture is non-plastic. Typical blend proportions of PFA to the screened material in the mixer 6a are:
If less than 25% of the screened material is less than 75 microns, add 10% PFA;
If above 25% of the screened material is less than 75 microns and up to 45% of the screened material is less than 75 microns, add proportionally up to 25% PFA.
The PFA is added in increments, which should not exceed 5% increments. If the increments exceed 5%, cohesive material in the mixer is not likely to be broken down finely enough (and this will lead to poor quality product).

The resulting non-plastic material is then stored in a primary stockpile 8. The primary stockpile 8 may be added to with material from different sources 9, 10 e.g. non-plastic material created (using the above process) from soil arisings from different excavation locations. The composite primary material stockpile 11 will be homogenised so that the batches from different sites are blended together. This can be easily achieved by continuously "turning over" the composite primary stockpile in the mixer 6a (or in a separate further mixer). Aggregate from the secondary stockpile 5 is added to the homogenised primary stockpile 11 to provide a complete grading within a defined grading envelope so as to achieve specific material properties in the final structural material 20 which is formed. In some cases it may not be necessary to add aggregate from the secondary stockpile but we envisage that such cases will be rare.

The composite primary stockpile material 11 will then be passed through a high shear mixer 6b (which may be the same mixer 6a as before) and water is added to result in a water content (of the resulting mixture) just below the optimum water content. The optimum water content is that needed to achieve maximum density when the mixture is compacted. The resulting material 20 may be used as a secondary structural material for lower road construction, for example. Cement 13, lime 14, a combination of cement and lime, and foamed or emulsified bitumen 15 may be subsequently added to this secondary structural material 20 in such proportions as to achieve specific material properties in the resulting primary structural (aggregate) material which is formed. Such primary materials 25 may be used for upper road construction, for example. It will be appreciated that the primary and secondary structural materials 25, 20 are relatively high and low strength materials respectively.

Typical blend proportions for the addition of lime, cement or bitumen are:
a) Addition of lime
   Between 1% and 5% of the dry weight of the (composite) primary stockpile material.
b) Addition of cement
   Between 1% and 5% of the dry weight of the (composite) primary stockpile material.
c) Addition of cement to be combined with foamed bitumen or emulsified bitumen.
   Cement between 1% and 2% of the dry weight of the composite primary stockpile material.
   Foamed or emulsified bitumen, between 3% and 7% of the dry weight of the composite primary stockpile material.

Other proportions are of course possible and will depend on the material properties required in the resulting structural material, as afore-mentioned.

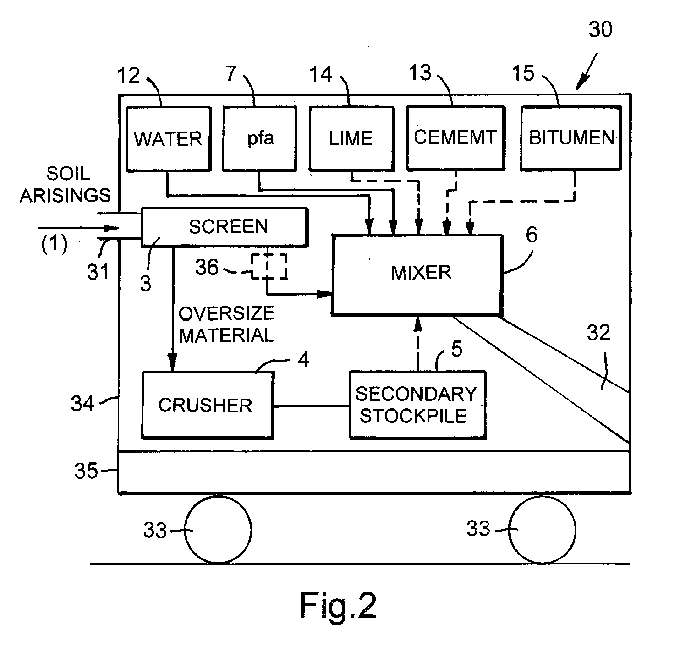

Since the action of transporting the soil arisings to the recycling plant will itself involve lorry movement, thereby adding to traffic congestion and environmental pollution, according to a further embodiment we propose that the recycling process will be carried out in a mobile plant 30 designed for this purpose. Fig. 2 illustrates schematically the components of such a mobile plant. The plant 30 comprises storage containers/silos for water 12, PFA 7, lime 14, cement 13, and bitumen (foamed or emulsified) 15. Soil arisings 1 are carried into an inlet 31 of the plant (a moving ramp or elevator (not shown) may be provided for this purpose) where they are screened by one or more screens 3 as afore-described. The mobile plant 30 includes an aggregate crusher 4 for crushing the screened-off oversize material and a container 5 for the crushed material which forms the secondary stockpile. A single high shear mixer 6 is included into which the non-oversize material (the "screened material") is fed from the screen(s) and mixed with PFA so as to obtain a non-plastic material. Quantities of water, lime, cement and/or bitumen are then added to the mixer 6 as desired in order to obtain a resulting (secondary or primary) structural material which is output from the mobile plant at an outlet 32 thereof, for use in construction at the site. The afore-described components of the plant are all mounted to a main frame 34 carried on or integral with a chassis 35 mounted on wheels 33. The mixer is provided with weighing and metering equipment (not shown) for controlling the amounts of material fed into the mixer 6, and the plant may also incorporate automatic sampling and analysing means 36 for use in determining the percentage (by weight) of screened material having size less than 75 microns (in any linear dimension).

By using mobile equipment that can initially screen or grade excavated waste, modify the fine material to make it non-plastic and then add water and stabilising additives, there will be an immediate reduction or elimination of soil being taken to landfill. There will therefore be significant benefits in the form of an elimination of excavation waste thus extending the life of landfill sites for household and domestic waste.

Using mobile plant allows flexibility in location of the treatment process. Minimum lorry movements will result within urban areas where often-significant excavations and construction, and re-construction, occurs. With large construction or re-construction sites the mobile plant may operate within the site, potentially eliminating any lorry movements to and from the plant.

## Claims

1. A method of producing a non-plastic material suitable for use in road construction using soil arisings from road excavations, the method comprising the steps of:
a) screening soil arisings so as to remove oversize material being of greater than a predetermined maximum size in any linear dimension to produce screened soil arisings having a size not greater than said predetermined maximum size; and
b) mixing said screened soil arisings with pulverised fuel ash, the amount of pulverised fuel ash relative to screened soil arisings being chosen so that the resulting material is non-plastic.

2. A method as claimed in claim 1 wherein said pulverised fuel ash is added to said screened soil arisings in increments.

3. A method as claimed in claim 2 wherein each said increment does not exceed 5 wt% of the total weight of screened soil arisings.

4. A method as claimed in any one of claims 1 to 3 wherein the amount of pulverised fuel ash added is related to the amount of screened material having a size less than a predetermined mesh size.

5. A method as claimed in claim 4 wherein said predetermined mesh size is 75 microns.

6. A method as claimed in claim 5 wherein the amount of pulverised fuel ash added is X % by weight of the total weight of pulverised fuel ash and screened arisings, where X is from 30 to 70% of the percentage by weight of screened soil arisings having a size less than said mesh size of 75 microns.

7. A method as claimed in any one of claims 4 to 6 which includes the preliminary steps of: sampling the screened soil arisings; analysing one or more samples so obtained; and calculating the percentage by weight of material which is less than said predetermined mesh size in any linear dimension.

8. A method as claimed in any one of claims 1 to 7 which includes the step of storing said resulting non-plastic material in a primary stockpile.

9. A method as claimed in any one of claims 1 to 8 wherein said non-plastic material is formed from screened soil arisings from different excavation sites.

10. A method as claimed in claim 9 which includes the steps of: taking batches of non-plastic material provide from different excavation sites; and blending said batches together to form a homogenised primary stockpile.

11. A method as claimed in any one of claims 1 to 10 which further includes the steps of crushing said oversize material so as to reduce said oversize material to less than said predetermined maximum size; and storing the crushed oversized material in a secondary stockpile.

12. A method as claimed in any one of claims 1 to 11 where said predetermined maximum size is not more than 40 mm.

13. A method as claimed in either one of claims 11 and 12 further including the step of: adding crushed oversized material from said secondary stockpile to non-plastic material from a said primary stockpile so as to modify the gradings envelope of the non-plastic material in said primary stockpile.

14. A method as claimed in any one of claims 1 to 13 which includes the step of mixing the non-plastic material from a said primary stockpile with water so as to form a secondary structural material.

15. A method as claimed in claim 14 wherein the amount of water which is added to a said primary stockpile material is selected so such that the resulting moisture content of said secondary structural material is from 97 to 101% of the optimum moisture content which achieves maximum density of the secondary structural material when compacted.

16. A method as claimed in either one of claims 14 and 15 comprising the further steps of adding one or more binding materials to the secondary structural material to form a primary structural material.

17. A method as claimed in claim 16 wherein said one or more binding materials comprises one or more of: cement, lime, foamed bitumen, and emulsified bitumen.

18. Apparatus suitable for processing soil arisings from one or more excavation sites, the apparatus comprising: at least one screen means for screening soil arisings so as to remove oversized material having a size greater than a predetermined maximum size in any linear dimension to provide, in use, screened soil arisings having a size not greater than said predetermined maximum size; first storage means for storing pulverised fuel ash, mixing means formed and arranged for mixing the screened soil arisings with pulverised fuel ash to produce, in use, a non-plastic material therein, the mixing means being provided with control means for controlling the amounts of pulverised fuel ash and screened soil arisings which, in use, are added to the mixing means.

19. Apparatus as claimed in claim 18 which further includes aggregate crushing means for crushing said oversized material.

20. Apparatus as claimed in either one of claims 18 and 19 wherein the mixing means is a high shear mixer, which has the capacity to break down lumps of soil and divide up a mass of aggregate of a size not greater than said predetermined maximum size.

21. Apparatus as claimed in nay one of claims 18 to 20 which further includes additional storage means for storing separately one or more binding materials.

22. Apparatus as claimed in claim 21 wherein the control means is formed and arranged to control the amount of at least one of said one or more binding materials added from said additional storage means to said mixing means.

23. Apparatus as claimed in any one of claims 18 to 22 wherein said at least one screen means is formed and arranged so that said predetermined maximum size is from 30 to 50 mm in any linear dimension.

24. Apparatus as claimed in any one of claims 18 to 23 which includes an aggregate crusher formed and arranged to crush said oversized material to a size less than said predetermined maximum size.

25. Apparatus as claimed in claim 24 wherein a container forming a secondary stockpile is formed and arranged to receive and store crushed material from said aggregate crusher.
